# EUROPEAN PATENT SPECIFICATION

(11) **EP 2 126 531 B1**
(45) Date of publication and mention of the grant of the patent: **14.09.2011**
(21) Application number: 08702076.4
(22) Date of filing: 07.02.2008
(51) Int. Cl.: G01K 1/14, G01K 3/10, G01K 7/20, G01K 7/24, G01M 3/00

(54) **TEMPERATURE DETECTOR**
TEMPERATURDETEKTOR
DÉTECTEUR DE TEMPÉRATURE

(30) Priority: 20.02.2007 GB 0703336
(43) Date of publication of application: 02.12.2009
(73) Proprietor: Thermocable (Flexible Elements) Limited, Bradford, West Yorkshire BD14 6LU (GB)
(72) Inventor: ROBST, Thomas, West Yorkshire BD18 4BW (GB)
(74) Representative: Gover, Richard Paul
(86) International application number: PCT/GB2008/000424
(87) International publication number: WO 2008/102104

(56) References cited:
- EP-A- 0 319 200
- WO-A-96/26425
- GB-A- 1 595 313
- US-A- 4 553 432

## Description

The present invention relates to a method and an apparatus for detecting temperature. Embodiments of the present invention are particularly suitable for detecting leaks from vessels containing cryogenic fluids, though more generally the present invention is suitable for detecting any rapid rise or fall in temperature.

In many industries there is a requirement to measure temperature. Consequently, there are a number of known temperature detectors suitable for providing a signal indicative of current temperature. For industries involving the storage or distribution of liquefied gases (such as liquefied natural gas) or other cryogenic substances, it is known to provide temperature detectors located close to storage tanks or pipelines. Should a leak of liquefied gas occur close to a temperature detector then the temperature of the detector will drop to a relatively low level. The detected low temperature can be used to trigger an alarm signal, alerting an operator to the leak. For liquefied gases it is important to detect leaks as quickly as possible, not only to prevent fluid loss but also because such a leak could present a danger to personnel.

A known type of liquefied gas leak detection system is the distributed temperature sensing system. Such systems comprise optoelectronic devices arranged to measure temperatures using optical fibres as linear sensors. A storage tank or pipeline is surrounded by one or more temperature detectors formed of optical fibre.

Distributed temperature sensing is based upon a change in temperature locally changing the characteristics of light transmission along the optical fibre. A change in temperature affects lattice oscillations within the fibre. When light travelling along the optical fibre encounters a region of different temperature, light scattering occurs in the optical fibre. Both Rayleigh and Raman scattering occurs. In Rayleigh scattering, the scattered light has the same wavelength as the incident light. In Raman scattering the scattered light undergoes a frequency shift determined partly by the temperature of the optic fibre at that point (leading to the generation of Stokes and anti-Stokes line components). Measurement of either the Rayleigh scattered or the Raman scattered components can give an indication of the location of the sensed temperature, with appropriate generation of the initial light signal and appropriate detection plus processing of the backscattered light signal.

Temperature measurements may be obtained as a continuous profile of temperature along the length of the optical fibre. The location of points of low temperature along the optical fibre that may indicate liquefied gas leaks can thus be determined.

By arranging such an optical fibre around the outside of a liquefied gas storage tank, or along a pipeline, the location of a leak can be determined. Alternatively, the optical fibre may be arranged within the foundations of a storage tank or pipeline or in a collection pool underneath a tank or pipeline where leaked liquefied gas is likely to collect.

A disadvantage of using optical fibre temperature detectors for a liquefied gas leak detection system is that they are relatively expensive. A liquefied gas leak detection system as described above requires expensive optoelectronic equipment, not only for generating the light signal, but also for detecting and processing the scattered light signal.

A second known liquefied gas leak detection system comprises a large number of discrete temperature detectors located at intervals about storage tanks or pipelines. Such discrete temperature detectors are arranged to provide a signal indicative of the temperature at that location. Typically a resistance temperature detector (resistance thermometer) is used.

There are two broad categories of resistance temperature detectors. Film resistance temperature detectors have a layer of a metal such as platinum (chosen for its linear change in resistance with temperature and chemical inertness) supported by a substrate. The layer may be very thin, for instance 1 micrometer thick. Wire-wound resistance temperature detectors comprise a short metal wire (such as a platinum wire) tightly wound into a coil supported by a former such as a glass rod (which also serves to minimise differential expansion of the wire).

In use, a small electrical current is passed through the film or wire and the change in resistance is measured. The current is minimised in order to limit any self-heating effect. The wire or film is connected to electrical leads, which connect the wire or film to a power source and the resistance measurement apparatus.

A disadvantage of using discrete temperature detectors for liquefied gas leak detection is that they can only, as the name suggests, monitor the temperature at discrete locations around storage tanks and pipelines. They are also relatively expensive which prohibits providing a larger number of temperature detectors so as to monitor a large area of the tank or pipeline. Individual resistance temperature detector elements may be located a considerable distance from the resistance measurement apparatus, connected by a long cable. This is disadvantageous as the cables themselves contribute significantly to the overall resistance of the detector. Attempts to mitigate this by providing additional parallel cables, the resistance of which may be measured and subtracted from the measured resistance of the temperature detector, involve considerable additional expense.

US-4553432 discloses a surveillance device for a container filled with a fluid including an electrical resistance wire for temperature control and a hygroscopic insulator for control of humidity. The electrical resistance wire for temperature control may be spirally or helically wound around an insulator covering the hygroscopic insulator. A processor is provided to measure the resistance of the resistance wire. The surveillance device is arranged to protect a rate of change of temperature of the container.

It can be desirable in other applications to detect a rise in temperature. For instance, in order to detect a fire a detector may be arranged to detect a rise in temperature either in a localised area or a more generalised rise in ambient temperature.

It is an object of embodiments of the present invention to obviate or mitigate one or more of the problems of the prior art whether identified above or elsewhere. Specifically it is an object of particular embodiments of the present invention to provide an alternative temperature detector suitable for detecting a rapid change in temperature. Specific embodiments of the present invention have as an object the detection of a leak of liquefied gas.

In a first aspect, the present invention provides a method of detecting a rate of change of temperature outside of a predetermined range of rates of change of temperature, the method comprising: providing an elongate cable comprising two heat sensitive elements extending along the length of the cable each element having a predetermined electrical resistance variation with temperature; coupling the elongate cable to a pair of resistances to form a bridge comprising first and second resistance branches connected in parallel, each branch comprising a first resistance connected in series with a second resistance, the first resistance of the first branch and the second resistance of the second branch each comprising a respective one of the heat sensitive elements; coupling a meter between a first position between the first and second resistances of the first branch and a second position between the first and second resistances of the second branch, the meter being arranged to provide an output signal indicative of the voltage difference between said positions, the voltage difference between said positions being indicative of the resistance of the heat sensitive elements; coupling the bridge to an electrical power supply such that a voltage is applied across the first and second resistance branches; measuring a first value of the output signal at a first time; measuring a second value of the output signal at a second later time; comparing the measured values; and providing an alarm signal if the difference between said first measured value and said measured second value exceeds a predetermined threshold.

Utilising a pair of heat sensitive elements allows a relatively large area to be monitored for rapid changes of temperature. In particular embodiments of the invention the cable may be wrapped around a container containing liquefied gas to detect reductions in temperature caused by a leak, a large area of the container can be monitored for leaks at a relatively low cost compared with optical fibre distributed temperature sensors. Further, detecting a difference between the resistance values (each resistance value being indicative of the temperature of the heat sensitive elements) provides an alarm signal if the rate of temperature change exceeds a predetermined value. Sudden temperature changes are likely to occur when the container leaks. By way of contrast, changes in ambient temperature of the environment typically occur at a relatively slow rate. Thus, the invention provides a relatively simple and cheap solution for detecting leaks, by effectively monitoring the rate of change of temperature, which allows minimisation of false alarms due to environmental effects without using expensive control circuitry to compensate for environmental changes in temperature.

The method of detecting a rate of change of temperature outside of a predetermined range of rates of change of temperature may comprise detecting a reduction in temperature exceeding a predetermined rate of reduction.

A detected reduction in temperature exceeding a predetermined rate of reduction may be indicative of a reduction in temperature caused by a leak from a container containing a volume of fluid at a non-ambient temperature, wherein the cable extends around at least a portion of the container.

The predetermined range of rates of change of temperature may be greater than an anticipated range of rates of change of ambient temperature for the environment surrounding the container. The container may be a pipe for transporting the fluid.

The method may further comprise the steps of: amplifying the measured values at a first gain setting, the amplified values at the first gain setting being compared and said alarm signal being provided if the difference between the first amplified value and the second amplified value exceeds the predetermined threshold; and amplifying the measured values at a second gain setting, the values at the second gain setting being compared and said alarm signal being provided if the difference between the first amplified value and the second amplified value exceeds the same predetermined threshold. A different alarm signal may be provided if the difference between the first amplified value and the second amplified value at the second gain setting exceeds the predetermined threshold but the difference between the first amplified value and the second amplified value at the first gain setting do not exceed the same predetermined threshold.

In a second aspect, the present invention provides an electrical circuit apparatus for detecting a rate of change of temperature outside of a predetermined range of rates of change of temperature according to claim 5, the apparatus comprising amoung others a bridge comprising first and second resistance branches connected in parallel, each branch comprising a first resistance connected in series with a second resistance; a meter coupled between a first position between the first and second resistances of the first branch and a second position between the first and second resistances of the second branch, arranged to provide an output signal indicative of the voltage difference between said positions; and a processor for measuring the output signal and for storing a first measured value of the output signal at a first time and a second measured value of the output signal at a second time, comparing the measured values and providing an alarm signal if the difference between said first measured value and said second measured value exceeds a predetermined threshold; wherein the first resistance of the first branch and the second resistance of the second branch each comprise a respective heat sensitive element having a predetermined electrical resistance variation with temperature, the heat sensitive elements extending along the length of an elongate cable such that the voltage difference between said positions is indicative of the resistance of the heat sensitive elements.

Such a counter-intuitive configuration of the bridge, by effectively placing the heat sensitive elements diametrically opposite one another within the bridge configuration, maximises the effect of changes in resistance of the elements upon the output signal. In other words, compared with prior art bridge configurations (such as Wheatstone bridges), a relatively large voltage difference will occur for a relative small change in resistance of the heat sensitive elements. Thus, the sensitivity of the bridge is improved. Each heat sensitive element may have the same predetermined electrical resistance variation with temperature.

Each heat sensitive element may have the same predetermined electrical resistance variation with temperature.

At least one of the second resistance of the first branch and the first resistance of the second branch may comprise a digital potentiometer, the apparatus comprising a processor arranged to control the resistance of said potentiometer or said potentiometers so as to minimise the voltage difference between said positions.

The apparatus may further comprise a programmable gain amplifier coupled to the meter and arranged to amplify the output signal; and a processor arranged in a first configuration to control the gain of the amplifier. The processor may be arranged to store measured values of the output signal at predetermined intervals, and to store the series of measured values. The processor may be arranged to delete a first stored value once a predetermined maximum number of values have been stored. The processor may be arranged to compare the last stored value and an earlier stored value, and to output an alarm signal if the difference between said stored values exceeds a predetermined threshold. The processor may be arranged to measure said output values at a first gain setting of the programmable gain amplifier and at a second gain setting of the programmable gain amplifier.

The apparatus may further comprise: an electrical power supply for providing a voltage across said bridge; and a processor arranged to output a false signal if the output signal is indicative of a break in either of said heat sensitive elements.

At least one of the said heat sensitive elements may comprise two conductors, each conductor extending along the length of the cable, and having a predetermined electrical resistance variation with temperature, the conductors being coupled in electrical series at one end of the cable. The two conductors may be formed as a twisted pair.

The heat sensitive elements may have a positive temperature coefficient of resistance. The heat sensitive elements may comprise metals. The metal may be nickel.

In a further aspect, the present invention provides a system comprising a container for containing a volume of fluid at a non-ambient temperature, and an apparatus as described above, wherein said at least one heat sensitive element extends around at least a portion of said container.

Embodiments of the present invention will now be described, by way of example only, with reference to the accompanying drawings, in which:
Figure 1 schematically illustrates a cable forming part of a temperature detector in accordance with an embodiment of the present invention;
Figure 2 schematically illustrates the cable of Figure 1 located about a liquefied gas storage tank, the cable forming part of a liquefied gas leak detection system in accordance with an embodiment of the present invention;
Figure 3 schematically illustrates the cable of Figure 1 located about a liquefied gas pipeline, the cable forming part of a liquefied gas leak detection system in accordance with an embodiment of the present invention;
Figure 4 schematically illustrates a temperature detector in accordance with an embodiment of the present invention; and
Figure 5 is a flow chart of a method of detecting whether a rate of change of temperature exceeds a threshold in accordance with an embodiment of the present invention.

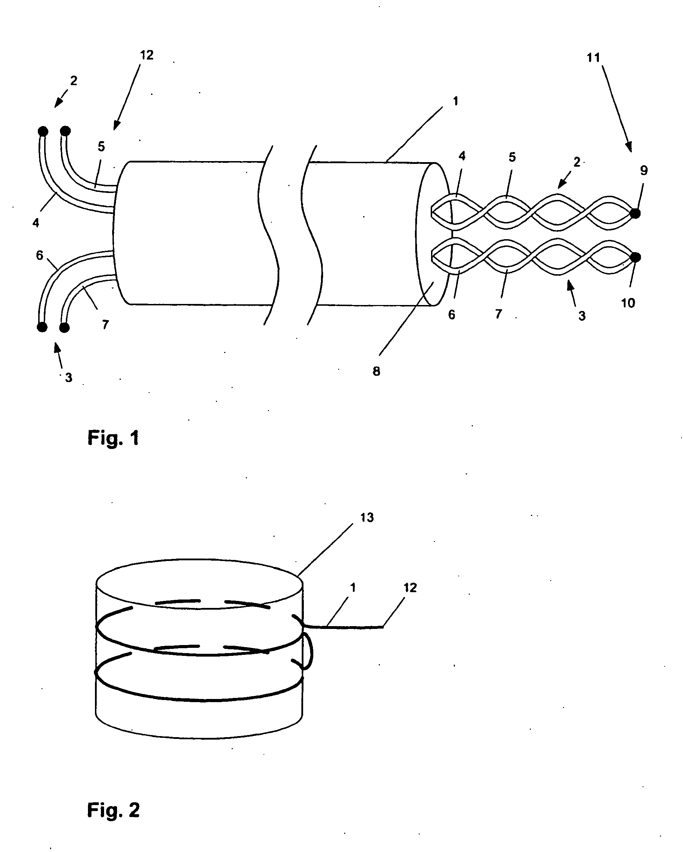

Referring first to Figure 1, this schematically illustrates an elongate cable 1 forming part of a temperature detector in accordance with an embodiment of the present invention. For convenience only the two ends of cable 1 are shown, although it will be appreciated that cable 1 may be of any length. Cable 1 comprises two pairs of conductors 2, 3. Each pair of conductors 2, 3 acts as a heat sensitive element having a predetermined electrical resistance variation with temperature. Each pair of conductors 2, 3 comprises two respective conductors (4, 5 and 6, 7). Each conductor 4-7 comprises an elongate electrically conductive wire formed from a material having an electrical resistance that changes in a predictable manner as the temperature of the conductor changes. For instance, the conductors may be formed from a material having a positive temperature coefficient (PTC) of resistance e.g. a metal. A suitable PTC material is Nickel, which typically has a resistance that increases by 4.5% for every rise in temperature of 10°C. Other suitable materials include pure copper (resistance increases by 4% per 10°C), silver (3.8% per 10°C) and aluminium (4.3% per 10°C). Furthermore, each conductor is arranged to be of substantially uniform cross section along the length of each conductor, such that at a given temperature the resistance of the conductor is proportional to the length of the cable 1.

A protective insulating sheath 8 is extruded over the two pairs of conductors 2,3. The protective sheath 8 may be formed from PVC, silicon rubber, Nylon (which is particularly suitable for chemical and UV resistance), PTFE or any other similar electrically insulating material. Within each pair of conductors 2, 3, the respective conductors (4, 5 and 6, 7) are electrically connected together (i.e. in series) at a first end 11 of the cable 1 (indicated at points 9 and 10). Within each pair of conductors 2, 3, the respective conductors (4, 5 and 6, 7) may be twisted together to reduce the pick up of electrical noise i.e. each pair of conductors is formed as a twisted pair. In use an electrical current is passed in one direction along one conductor of each pair of conductors and returns along the other conductor of each pair.

As shown in Figure 1, at the first end 11 of the cable 1 the sheath 8 is shown partly removed from the conductors 4-7 in order to illustrate the structure and the connections 9, 10. However, it will be appreciated that in practice the insulating sheath 8 may extend to the first end of the cable 1 such that the connections 9 and 10 are fully enclosed by insulation. Alternatively, the conductors 4-7 may extend beyond sheath 8 at the first end 11 of the cable 1 allowing the conductors 4-7 to be connected together into pairs of conductors 2, 3 outside of the sheath 8. At a second end 12 of the cable 1 the conductors 4-7 are exposed outside of the sheath 8 for connection to the remainder of the temperature detector.

Embodiments include the use of a cable as illustrated in Figure 1, forming part of a temperature detector suitable for use as a fluid leak detection system. In use cable 1 is arranged such that it passes close to potential leak locations. The cable can be arranged to pass around the outer periphery of a container, along at least a portion of the external surface of the container, or even be positioned between inner and outer surfaces of the container. The container may be any vessel e.g. a tank or pipe. The vessel may contain any fluid (e.g. liquid or gas). The vessel may be arranged to store the fluid at a non-ambient pressure (e.g. compressed, such as compressed gas).

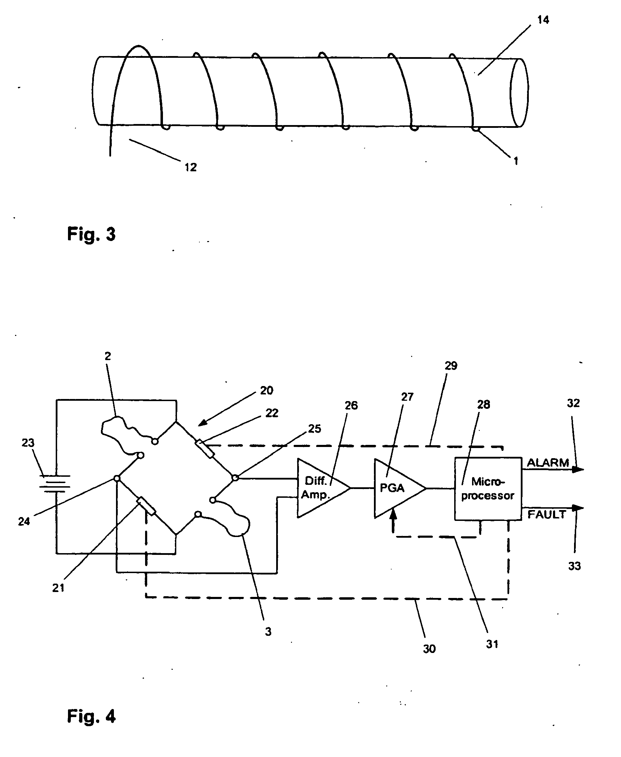

For instance, as shown in Figure 2, cable 1 can be arranged to pass around the outside of a liquid gas storage tank 13 (or, for storage tanks having a double wall structure, in the annular space between the walls). Alternatively, as shown in Figure 3, cable 1 can be arranged to extend along the length of an external surface liquefied gas pipeline 14 in a spiral.

It will be appreciated that in accordance with embodiments of the present invention, a liquefied gas leak detection system can comprise either a single cable 1, or a number of separate cables 1 that may be independently monitored. Owing to the construction of cable 1, connections to the conductors 4-7 need only be made at one end 12 of the cable 1. Consequently, only the second end 12 of cable 1 need extend from the tank 13 or pipeline 14 towards the remainder of the leak detection system. Further, providing two pairs of conductors enhances the temperature sensitivity of the cable.

If a leak occurs close to part of cable I then the temperature of the cable 1 at that point will reduce rapidly and by a significant amount. Assuming that the majority of the cable is at a typical ambient temperature (e.g. the external environment surrounding the container is at 20°C) and that the liquefied gas cools a portion of the cable to -120°C, then it can be appreciated that the localised cooling will have a significant affect on the overall resistance of cable 1. The proportionate change of the resistance of the cable 1 is dependent upon the length of the cable 1 (i.e. how much of the cable 1 remains at the ambient temperature) and the size of the leak (how much of the cable is cooled to -120°C).

As noted above, the conductors can be formed from a PTC material. The resistance of each conductor in the region of the leak would therefore be reduced. Consequently the overall resistance of each individual of conductor 4-7 would be reduced by an amount proportional to the size of the leak (that is, by how much, and over what length of cable, the leaked fluid cools the cable 1).

The resistance of each pair of conductors can be measured by connecting suitable resistance measurement means to the conductors at the exposed second end of the cable 1. A suitable resistance measurement means is described below with reference to Figure 4. Each pair of conductors 2, 3 is identical, and both extend along the same length of cable. Therefore, the resistance of each pair of conductors at a given temperature is the same.

As both pairs of conductors 2, 3 extend along the cable, both pairs are cooled by substantially the same amount when a liquefied gas leak contacts cable 1. Consequently, the resistance of each pair of conductors 2, 3 is reduced by substantially the same amount when a leak occurs. This effect is exploited to increase the sensitivity of the measurement of a change in temperature, as will be described below in connection with Figure 4.

Referring now to Figure 4, this schematically illustrates a detector apparatus in accordance with an embodiment of the present invention, suitable for use in a liquefied gas leak detection system. The temperature detector effectively monitors the rate of temperature change, and is adapted to detect a sudden decrease in resistance of each pair of conductors 2, 3, indicative of a leak i.e. in the fluid lowering the temperature of the cable 1 or a sudden increase in resistance indicative of a rise in temperature (for instance, the cable forms part of a fire detection circuit). Thus, a relatively sudden reduction in the resistance of cable 1 indicates that a leak of liquefied gas onto the cable 1 has occurred somewhere along the length of the cable 1. Typically, changes in ambient (i.e. environmental) temperature occur over a small temperature range (e.g. - 10°C to + 40°C), and relatively slowly. The exact threshold used to trigger an alarm can be set dependent upon the particular environment in which the detector is located e.g. depending upon the country and/or surrounding architecture, all of which will influence the rate at which the ambient temperature will normally change. However, a typical reasonable assumption could be that the ambient temperature changes at a maximum rate of approximately 1°C per 30 minutes, with a corresponding suitable threshold for alarm being set such that an alarm signal is provided if this rate is exceeded.

Although pairs of conductors 2, 3 are shown separately, it will be appreciated that in practice the pairs of conductors 2, 3 continue to form part of a single cable 1, with separate connections made to each conductor 2-7 at the second end 12 of the cable 1.

Each pair of conductors 2, 3 (i.e. each heat sensitive element) forms a separate resistance within an electrical bridge 20, similar in arrangement to a Wheatstone bridge. The bridge 20 comprises a first branch (formed of resistances 2, 21) and a second branch (formed of resistances 22, 3). The branches extend in parallel, from a common point (i.e. the position in the circuit at which resistances 2, 22 are connected) to a common position (i.e. the position at which resistances 21 and 3 are connected). Conductor pair 2 can thus be viewed as the first resistance in the first branch, and resistor 21 as the second resistance in the first branch. In the second branch, resistor 22 can be viewed as the first resistance, and conductor pair 3 as the second resistance. It is connected between a first position 24 between the first and second resistances (2,21) of the first branch, and also to a second position 25 between the first and second resistances 22,3 of the second branch. The meter is arranged to provide an output signal indicative of the voltage difference between the positions 24, 25.

For conductor pair 2, connections are made to conductors 4 and 5 such that current passes through both conductors. For conductor pair 3, connections are made to conductors 6 and 7 such that current passes through both conductors. Resistors 21 and 22 complete the resistances of the bridge. In certain embodiments of the present invention resistors 21 and 22 comprise digital potentiometers arranged such that the bridge can be calibrated (e.g. balanced) for different lengths of cable 1 and different ambient temperatures, as will be described below.

Electrical power supply 23 provides an electrical current that passes through the Wheatstone bridge 20. Alternatively, it may be considered that power supply 23 applies a predetermined voltage in parallel across conductor pair 2 / resistor 21 (i.e. the first branch) and resistor 22 / conductor pair 3 (the second branch).

The resistance of pairs of conductors 2,3 is the same. As noted above, when a leak of low temperature fluid such as liquefied gas occurs, the resistance of the pairs of conductors 2, 3 both change by the same amount. When cable 1 is at an ambient temperature, the resistance of resistors 21 and 22 are chosen (and/or controlled) such that a differential voltage between terminals 24 and 25 is approximately zero. The resistance of each resistor 21, 22 is arranged to be substantially the same as the resistance of each pair of conductors 2,3 at the ambient temperature.

If the voltage applied across bridge 20 remains constant and the resistance of resistors 21 and 22 remains constant, then as the resistance of each pair of conductors 2,3 falls due to a leak of low temperature fluid contacting a portion of cable 1, the voltage at terminal 24 rises and the voltage at terminal 25 falls. This is because as the resistance of the pairs of conductors falls a greater proportion of the voltage applied to each branch 2, 21 and 22, 3 of bridge 20 is dropped across the resistors 21 and 22 respectively. The resulting differential voltage between terminals 24 and 25 is detected by the meter, which here is a differential amplifier 26, which provides an output signal proportional to the differential voltage between the terminals.

It will be appreciated that the detector apparatus of figure 4 could be modified such that only a single pair of conductors is used, the remaining three resistances forming the Wheatstone bridge 20 comprising substantially non-temperature dependent resistors e.g. fixed resistors and/or digital potentiometers. A differential voltage between terminals 24 and 25 would still be produced when the resistance of the single pair of conductors changes. However, advantageously, the embodiment of the present invention illustrated in Figure 4 provides for increased sensitivity to changes in the average temperature of cable 1, as the effect of the change in temperature on the voltage differential between terminals 24 and 25 is magnified by having two pairs of conductors, both of which respond to a change in temperature in the same way (e.g. both have a PTC). By utilising two pairs of conductors (heat sensitive elements) in such a configuration, the voltage at one terminal increases and the voltage at the other terminal decreases when the resistance of the cable changes. If only a single pair of conductors (i.e. one heat sensitive element) were used as a resistance in one branch of the bridge, the voltage at one terminal (the terminal on the other branch) would remain constant and thus the change in the differential voltage between terminals 24,25 would only be half as large. For some applications, using only a single pair of conductors (i.e. one heat sensitive element) would result in a detector that was not sufficiently sensitive to detect small changes in temperature, or relatively gradual changes in temperature. Depending upon the application in which the detector is being used, the lack of sensitivity may mean that the detector is not able to detect the required range of changes in temperature: At best, using a single heat sensitive element would result in an inferior detector apparatus.

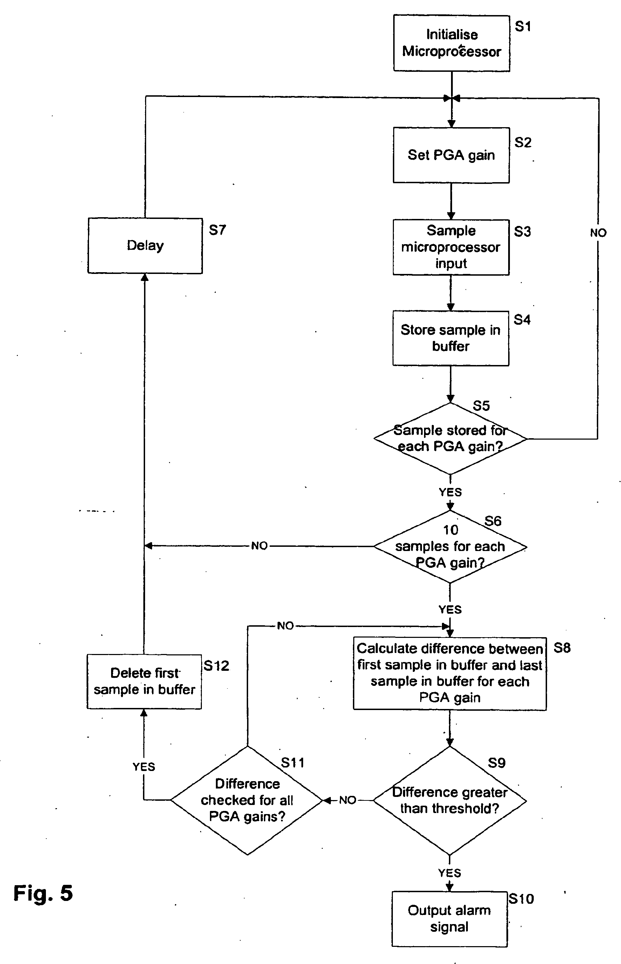

The output signal from differential amplifier 26 is passed to a programmable gain amplifier 27, which further amplifies the differential voltage between terminals 24 and 25 of Wheatstone bridge 20. Programmable gain amplifier 27 in turn passes the amplified output signal to a processor, which in this embodiment is a microprocessor 28. Microprocessor 28 is responsible for processing the amplified signal output from the programmable gain amplifier 27. The processing of this signal within microprocessor 28 is described in connection with the flow chart of Figure 5.

In certain embodiments of the present invention resistors 21 and 22 comprise digital potentiometers. Microprocessor 28 is also arranged to control the digital potentiometers (resistors 21, 22), for setting the resistance value of resistors 21 and 22 in order to calibrate the temperature detector for the length of cable 1 and the ambient temperature. This calibration process may be performed once when a temperature detector according to Figure 4 is installed as a liquefied gas leak detection system, or the calibration process can be periodically repeated, particularly in order to take account of seasonal or diurnal changes in ambient temperature and/or alteration in the resistances of the bridge over time.

In the preferred embodiment, the resistance of each pair of conductors 2,3 is the same at any temperature, for a given length of cable 1. In order to calibrate the bridge 20, when the leak detection system is at an ambient temperature the resistance values of resistors 21 and 22 are each varied until the differential voltage between terminals 24 and 25 is approximately zero. The differential voltage will be zero when the resistors 21,22 are equal to the resistances of conductor pairs 2,3. The microprocessor 28 provides a control signal to adjust the resistances of resistors 21, 22 along control wires 29,30.

Microprocessor 28 is also arranged to control the gain of the programmable gain amplifier 27. Microprocessor 28 is arranged to transmit a control signal to the programmable gain amplifier 27 along control wire 31, instructing the programmable gain amplifier 27 either to maintain the same gain setting, or to change to a new gain setting. Control wire 31 comprises a serial programmable interface (SPI).

In order to allow detection of a rapid temperature change (e.g. indicative of a leak), microprocessor 28 is arranged to sample the signal from programmable gain amplifier 27 and store value representation of the sampled signal within a buffer. In this particular embodiment, the sampling process undertaken by the microprocessor comprises an analogue to digital conversion. At least two values indicative of the resistance of the heat sensitive elements (e.g. as represented by the difference in voltage between positions 24, 25) are sampled. More preferably, the microprocessor is arranged to sample the signal from the gain amplified at regular intervals.

Pairs of stored values are then processed (e.g. compared, with the microprocessor functioning as a comparator), to determine a value representative of a rate of change of temperature. If the rate of change of temperature exceeds a predetermined threshold then an alarm signal is transmitted on alarm output 32.

If a fault condition is detected then a fault signal is transmitted on fault output 33. A fault condition can be detected by comparing the voltage at position 24 to the negative pole of the supply 23 and the voltage at position 25 to the positive pole of the supply 23. If the voltage difference between either of these positions is zero this is indicative of a break (open-circuit) in the corresponding conductor pair 2, 3. Selecting a relatively high overall resistance for each conductor pair 2, 3 will ensure that the voltage at positions 24 or 25 never approaches the supply rail voltages during normal operation.

Alarm and fault signals are arranged to trigger an external event, such as the display for a warning light, in order to alert an operator to either a leak of liquefied gas, or a fault condition within the leak detection system.

The flow chart of Figure 5 illustrates a method of processing signals from the programmable gain amplifier 27 within microprocessor 28. The processing is arranged to detect rapid changes in the differential voltage between terminals 24, 25, corresponding to a rapid change in resistance of the pairs of conductors 2, 3. A rapid change of resistance of the pairs of conductors 2, 3 corresponds to a rapid change in temperature of at least a portion of the cable 1, and thus is indicative of a leak of liquefied gas.

If such a rapid change in differential voltage is detected then the alarm signal on alarm output 32 is triggered. This advantageously prevents an alarm signal being triggered by a more gradual change in ambient temperature in the environment surrounding cable 1. In order to trigger an alarm signal, all that is needed is a relatively quick change in the resistance of cable 1, rather than the alarm signal being triggered by the temperature (resistance) dropping below an absolute temperature, (resistance) threshold. The microprocessor is further arranged to distinguish between different severities of leaks of liquefied gas (corresponding to different rates of change of the differential voltage) as will now be explained. Different alarm signals can be output to indicate different sizes of leaks to the operator.

At step S1 microprocessor 28 is initialised. Step S1 can be performed when the microprocessor is first powered up, or when it is reset, or the system re-calibrated. Microprocessor 28 then monitors the signal from the programmable gain amplifier 27. Typically, during this initial procedure, the processor will also control the digital potentiometers to minimise the amplified output signal from differential amplifier i.e. to balance (calibrate) the bridge, as described above.

At step S2 microprocessor 28 then enters the first step of the monitoring loop; and sets the gain of programmable gain amplifier 27 to a first value, by transmitting a control signal to the amplifier on control wire 31.

As noted above, the microprocessor is arranged not only to detect a leak of liquefied gas (via its consequent effect on the temperature and thus resistance of conductors 4-7) but also to provide a measure of the size of the leak. The size of the leak has an impact on the rate of change of the voltage differential between terminals 24 and 25. Differential amplifier 26 detects the voltage differential and then the programmable gain amplifier 27 amplifies the voltage differential signal. Pairs of samples can be compared in order to determine the rate of change of differential voltage. The comparison process comprises determining the difference between pairs of samples (each sample being obtained at a different time) and comparing the difference to a predetermined threshold i.e. effectively determining whether the rate of change in resistance of the cable has exceeded a threshold. Typically, each sample within the pair would be obtained using the same gain setting.

As described below with reference to Table 1, by varying the gain of programmable gain amplifier 27 the threshold can be kept the same when comparing pairs of samples, whilst still allowing different sized leaks to be detected. In such an instance, if the threshold were exceeded, then the alarm signal output would correspond to the amplifier gain. For example, a different alarm signal could be given corresponding to each amplified gain. Alternatively, a different alarm signal could be given indicative only of the amplifier gains that had exceeded the predetermined threshold (e.g. and hence also indicative of the values of the amplifier gains that had not exceeded the threshold). The threshold being exceeded by values sampled on a small gain would represent a large leak. Smaller leaks, and thus smaller changes between samples of the differential voltage between terminals 24 and 25 may thus be detected when a higher gain is used.

Alternatively, in order to detect leaks of varying sizes the gain of the programmable gain amplifier can thus be kept the same, and the threshold can be varied. In such an instance, if the threshold were exceeded, then the alarm signal output would correspond to the value of the predetermined threshold that had been exceeded. A low threshold being exceeded would represent a large leak.

At step S3 the input signal to the microprocessor is sampled. As noted above, this comprises an analogue to digital conversion performed upon the signal to the microprocessor, with the resultant digital signal value being stored. The signal sample values are stored in a buffer within the microprocessor at step S4. The buffer is a first in first out (FIFO) buffer, arranged to a predetermined number of samples (e.g. 10 samples) for each gain setting of the programmable gain amplifier. Any number of different levels of gain can be utilised. In this particular example, the programmable gain amplifier has four different levels of gain, each represented by an integer multiple (e.g., 4, 8, 16, 32) that indicates by how much the input to the programmable gain amplifier (the output of the differential amplifier) is amplified.

At decision step S5 a check is made whether an input sample has been stored at that time for each of the four gain settings. If four samples have been stored then the processing passes to decision step S6. If all four samples have not been stored then the processing returns to step S2, the programmable gain amplifier is set to a new gain setting and a new sample stored.

At decision step S6 a check is made to see whether the buffer is full. That is, a check is made to see whether ten samples have been stored for each of the four gain settings of the programmable gain amplifier. When the liquefied gas leak detection system is first initialised, the buffer is empty. If all storage slots allocated for each gain setting have not been used then processing passes to step S7, where the processing is delayed for a predetermined period of time (corresponding generally to the sampling interval), for instance three seconds. Processing then passes back to step S2, where the gain of the programmable gain amplifier (PGA) is returned to its original value and further input samples are stored. Once the buffer has been initially filled then processing passes to step S8.

At step S8, the buffer is full of samples. The buffer may be considered conceptually as a two dimensional array, such as shown in Table 1 below. The first column represents the time at which samples are taken. As noted above, the delay at step S7 may be 3 seconds, consequently each set of samples are 3 seconds apart. At each time slot four samples are stored in the buffer corresponding to the four different PGA gain settings.

At step S8, for the first gain setting (4) the difference between the first sample stored in the buffer (0.012) and the last sample stored in the buffer (0.188) is calculated. At decision step S9 this difference value (0.176) is compared to a threshold (for instance 1.000). If the difference value exceeds the threshold then the appropriate alarm signal is transmitted on alarm output 32 at step S10. If the threshold is not exceeded then at decision step S11 a check is made whether a difference value has been calculated for each of the sets of stored samples at that time slot corresponding to different gain settings.

**Table 1 - Stored samples within the microprocessor.**

| | **PGA Gain** | | | |
|---|---|---|---|---|
| **Time (s)** | **4** | **8** | **16** | **32** |
| **0** | 0.012 | 0.025 | 0.050 | 0.100 |
| **3** | 0.012 | 0.025 | 0.050 | 0.100 |
| **6** | 0.012 | 0.025 | 0.050 | 0.100 |
| **9** | 0.038 | 0.075 | 0.150 | 0.300 |
| **12** | 0.075 | 0.150 | 0.300 | 0.600 |
| **15** | 0.125 | 0.250 | 0.500 | 1.000 |
| **18** | 0.150 | 0.300 | 0.600 | 1.200 |
| **21** | 0.150 | 0.300 | 0.600 | 1.200 |
| **24** | 0.150 | 0.300 | 0.600 | 1.200 |
| **27** | 0.188 | 0.357 | 0.750 | 1.500 |

If all required difference values have not been calculated then processing passes back to step S8, this time calculating a difference value at a new gain setting.

In the example values illustrated in Table 1, it will been seen that only the difference between the first and last values (0.1 and 1.5) on gain setting 32 will exceed the example nominal threshold (1.000). In such an instant, a single alarm signal would be output, corresponding to a large gain value e.g. indicative of a small leak being detected.

However, if all of the first and last pairs of values in the buffer are compared, and the respective differences between each pair do not exceed the threshold, processing passes to step S12. At step S12, the first four samples (at time 0s) are deleted and the remaining samples renumbered (moved-up) within the buffer (i.e. those samples previously in the second time slot (3s) are moved to the position corresponding to the first time slot (0s), the third to the second etc). Processing then passes to step S7 where there is a delay before the processing returns to step S2 to capture a further group of samples, which are stored in the last sample slot, and the process repeated.

It can be seen that the processing of Figure 5 provides an efficient method of processing sampled data relating to the difference in voltage between terminals 24 and 25 in order to determine whether to trigger an alarm signal. It will be appreciated that this method of processing temperature data may be equally applied for processing data from alternative types of temperature detectors in order to determine whether a rate of change of temperature exceeds a threshold. The above method of processing has been primarily described as being performed within hardware, specifically two amplifiers and a microprocessor. The microprocessor, in conjunction with the amplifiers, acts as a meter, to measure values indicative of the resistance of the heat sensitive element. The microprocessor also acts as a comparator, processing and comparing the measured values. It will be readily appreciated that the functional elements could be implemented using different types of analogue or digital hardware. For example, all of the processing could be carried out in software, with an input signal to a computer programmed with the software being provided from an external temperature detector. Alternatively, the desired processing could be performed by a processor implemented by an analogue circuit.

Embodiments of the present invention have been primarily described in conjunction with a method of detecting leaks of fluids having a lower than ambient temperature e.g. liquefied gas. However, it will be readily appreciated that they could alternative be used for detecting rapid rises in temperature, such as caused by a fire or by leakage of a fluid having a higher than ambient temperature. At its most general, the present invention provides methods and detectors for detecting changes in temperature exceeding one or more predetermined rates of change of temperature.

In the above particular preferred embodiment, a particular rate of sampling has been described. However, it should be appreciated that the sampling rate should be implemented dependent upon the particular environment in which the apparatus is utilised. A slow sampling rate may cause the system to "miss" a relatively fast change which causes the cable to cool down and heat up again (e.g. a leak running over the cable for a brief period). However a fast sample rate requires the alarm threshold between samples to be reduced which decreases the signal to noise ratio of the system. For example, a sampling rate of 0.3Hz (1 sample every 3s) can be utilised for detecting leaks of liquefied gas. The alarm threshold is set such that the alarm will be triggered if approximately 5% of the total length of cable 1 is rapidly cooled by at least 40°C, in less than 30 seconds. Such performance is particularly suitable for when the system is used in detecting leaks of a very low temperature fluid, such as LNG.

Following experimentation, the present inventor has determined that the rate of change of temperature which should trigger an alarm (i.e. the alarm threshold) should be (i.e. correspond to) at least 2 or 3 times the maximum rate of change of ambient temperature, so as to avoid false triggering of an alarm. Furthermore, the conductors have been described as having identical positive temperature coefficients. They could equally have a negative temperature coefficient, as this would also give rise to a differential voltage between terminals 24 and 25. Further, the conductors could have values of different temperature coefficient.

Further modifications and applications of the present invention will be readily apparent to the appropriately skilled person from the teaching herein, without departing from the scope of the appended claims.

## Claims

1. A method of detecting a rate of change of temperature outside of a predetermined range of rates of change of temperature, the method comprising:
providing an elongate cable (1) comprising two heat sensitive elements (2, 3) extending along the length of the cable (1) each element (2, 3) having a predetermined electrical resistance variation with temperature;
coupling the elongate cable (1) to a pair of resistances (21, 22) to form a bridge (20) comprising first and second resistance branches connected in parallel, each branch comprising a first resistance (2, 22) connected in series with a second resistance (21, 3), the first resistance (2) of the first branch and the second resistance (3) of the second branch each comprising a respective one of the heat sensitive elements (2, 3);
coupling a meter (26) between a first position (24) between the first (2) and second (21) resistances of the first branch and a second position (25) between the first (22) and second (3) resistances of the second branch, the meter (26) being arranged to provide an output signal indicative of the voltage difference between said positions (24, 25), the voltage difference between said positions (24, 25) being indicative of the resistance of the heat sensitive elements (2, 3);
coupling the bridge (20) to an electrical power supply (23) such that a voltage is applied across the first and second resistance branches;
measuring a first value of the output signal at a first time;
measuring a second value of the output signal at a second later time;
comparing the measured values; and
providing an alarm signal if the difference between said first measured value and said measured second value exceeds a predetermined threshold.

2. A method as claimed in claim 1, wherein the method of detecting a rate of change of temperature outside of a predetermined range of rates of change of temperature comprises detecting a reduction in temperature exceeding a predetermined rate of reduction.

3. A method as claimed in claim 1 or claim 2, further comprising the steps of:
amplifying the measured values at a first gain setting, the amplified values at the first gain setting being compared and said alarm signal being provided if the difference between the first amplified value and the second amplified value exceeds the predetermined threshold; and
amplifying the measured values at a second gain setting, the values at the second gain setting being compared and said alarm signal being provided if the difference between the first amplified value and the second amplified value exceeds the same predetermined threshold.

4. A method as claimed in claim 3, wherein a different alarm signal is provided if the difference between the first amplified value and the second amplified value at the second gain setting exceeds the predetermined threshold but the difference between the first amplified value and the second amplified value at the first gain setting do not exceed the same predetermined threshold.

5. An electrical circuit apparatus for detecting a rate of change of temperature outside of a predetermined range of rates of change of temperature, the apparatus comprising:
a bridge (20) comprising first and second resistance branches connected in parallel, each branch comprising a first resistance (2, 22) connected in series with a second resistance (21, 3), the bridge being arranged to be coupled to an electrical power supply such that a voltage is applied across the first and second resistance branches;
a meter (26) coupled between a first position (24) between the first (2) and second (21) resistances of the first branch and a second position (25) between the first (22) and second (3) resistances of the second branch, arranged to provide an output signal indicative of the voltage difference between said positions (24, 25); and
a processor (28) for measuring the output signal and for storing a first measured value of the output signal at a first time and a second measured value of the output signal at a second time, comparing the measured values and providing an alarm signal if the difference between said first measured value and said second measured value exceeds a predetermined threshold;
wherein the first resistance (2) of the first branch and the second resistance (3) of the second branch each comprise a respective heat sensitive element (2, 3) having a predetermined electrical resistance variation with temperature, the heat sensitive elements (2, 3) extending along the length of an elongate cable (1) such that the voltage difference between said positions (24, 25) is indicative of the resistance of the heat sensitive elements (2, 3).

6. An apparatus as claimed in claim 5, wherein at least one of the second resistance (21) of the first branch and the first resistance (22) of the second branch comprises a digital potentiometer, the apparatus comprising a processor (28) arranged to control the resistance of said potentiometer or said potentiometers (21, 22) so as to minimise the voltage difference between said positions (24, 25).

7. An apparatus as claimed in claim 5 or claim 6, wherein the apparatus further comprises a programmable gain amplifier (27) coupled to the meter (26) and arranged to amplify the output signal; and
a processor (28) arranged in a first configuration to control the gain of the amplifier (27).

8. An apparatus as claimed in claim 7, wherein the processor (28) is arranged to store measured values of the output signal at predetermined intervals, and to store the series of measured values.

9. An apparatus as claimed in claim 8, wherein the processor (28) is arranged to compare the last stored value and an earlier stored value, and to output an alarm signal if the difference between said stored values exceeds a predetermined threshold.

10. An apparatus as claimed in claim 8 or claim 9, wherein the processor (28) is arranged to measure said output values at a first gain setting of the programmable gain amplifier (27) and at a second gain setting of the programmable gain amplifier (27).

11. An apparatus as claimed in any one of claims 5 to 10, the apparatus further comprising:
an electrical power supply (23) for providing a voltage across said bridge (20); and
a processor (28) arranged to output a false signal if the output signal is indicative of a break in either of said heat sensitive elements (2, 3).

12. An apparatus as claimed in any one of claims 5 to 11, wherein at least one of the said heat sensitive elements (2, 3) comprises two conductors (4 -7), each conductor (4 - 7) extending along the length of the cable (1), and having a predetermined electrical resistance variation with temperature, the conductors (4 - 7) being coupled in electrical series at one end of the cable (1).

13. An apparatus as claimed in any one of claims 5 to 11, wherein said heat sensitive elements (2, 3) have a positive temperature coefficient of resistance.

14. An apparatus as claimed in claim 5, wherein the processor comprises a computer apparatus comprising:
a program memory storing processor readable instructions; and
a processor (28) configured to read and execute instructions stored in said program memory;
wherein the processor readable instructions comprise instructions controlling the processor (28) to:
measure the first value of the output signal at a first time;
measure the second value of the output signal at a second later time;
compare the measured values; and
provide the alarm signal if the difference between said first measured value and said measured second value exceeds a predetermined threshold.

15. A system comprising a container (13) for containing a volume of fluid at a non-ambient temperature, and an apparatus as claimed in any one of claims 5 to 14, wherein said at least one heat sensitive element (2, 3) extends around at least a portion of said container (13).

## Patentansprüche

1. Verfahren zum Detektieren einer Temperaturveränderungsrate außerhalb eines vorbestimmten Bereichs von Temperaturveränderungsraten, das Verfahren umfassend:
Bereitstellen eines langgestreckten Kabels (1), das zwei hitzeempfindliche Elemente (2, 3) umfasst, welche sich entlang der Länge des Kabels (1) erstrecken, wobei jedes Element (2, 3) eine vorbestimmte Änderung des elektrischen Widerstandes mit der Temperatur hat;
Verbinden des langgestreckten Kabels (1) mit einem Paar von Widerständen (21, 22) zur Ausbildung einer Brücke (20), welche parallel geschaltete erste und zweite Widerstandszweige umfasst, wobei jeder Zweig einen ersten Widerstand (2, 22) umfasst, der mit einem zweiten Widerstand (21, 3) in Reihe geschaltet ist, wobei der erste Widerstand (2) des ersten Zweigs und der zweite Widerstand (3) des zweiten Zweigs jeweils eines der hitzeempfindlichen Elemente (2, 3) umfassen;
Verbinden eines Messgeräts (26) zwischen einer ersten Position (24) zwischen dem ersten (2) und dem zweiten (21) Widerstand des ersten Zweigs und einer zweiten Position (25) zwischen dem ersten (22) und dem zweiten (3) Widerstand des zweiten Zweigs, wobei das Messgerät (26) derart eingerichtet ist, dass es ein Ausgangssignal bereitstellt, welches für den Spannungsunterschied zwischen diesen Positionen (24, 25) indikativ ist, wobei der Spannungsunterschied zwischen diesen Positionen (24, 25) indikativ für den Widerstand der hitzeempfindlichen Elemente (2, 3) ist;
Verbinden der Brücke (20) mit einem elektrischen Netzgerät (23) derart, dass eine Spannung über den ersten und den zweiten Widerstandszweig angelegt wird;
Messen eines ersten Werts des Ausgangssignals zu einer ersten Zeit;
Messen eines zweiten Werts des Ausgangssignals zu einer zweiten, späteren Zeit;
Vergleichen der gemessenen Werte; und
Bereitstellen eines Alarmsignals, wenn der Unterschied zwischen diesem ersten gemessenen Wert und diesem zweiten gemessenen Wert einen vorbestimmten Schwellenwert überschreitet.

2. Verfahren nach Anspruch 1, wobei das Verfahren zum Detektieren einer Temperaturveränderungsrate außerhalb eines vorbestimmten Bereichs von Temperaturveränderungsraten Detektieren von Temperaturverringerungen welche eine vorbestimmte Verringerungsrate überschreiten, umfasst.

3. Verfahren nach Anspruch 1 oder Anspruch 2, weiterhin umfassend die Schritte:
Verstärken der gemessenen Werte mit einer ersten Verstärkungseinstellung, wobei die verstärkten Werte bei der ersten Verstärkungseinstellung verglichen werden und dieses Alarmsignal bereitgestellt wird, wenn der Unterschied zwischen dem ersten verstärkten Wert und dem zweiten verstärkten Wert den vorbestimmten Schwellenwert überschreitet; und
Verstärken der gemessenen Werte mit einer zweiten Verstärkungseinstellung, wobei die Werte bei der zweiten Verstärkungseinstellung verglichen werden und dieses Alarmsignal bereitgestellt wird, wenn der Unterschied zwischen dem ersten verstärkten Wert und dem zweiten verstärkten Wert denselben vorbestimmten Schwellenwert überschreitet.

4. Verfahren nach Anspruch 3, wobei ein unterschiedliches Alarmsignal bereitgestellt wird, wenn der Unterschied zwischen dem ersten verstärkten Wert und dem zweiten verstärkten Wert bei der zweiten Verstärkungseinstellung den vorbestimmten Schwellenwert überschreitet, aber der Unterschied zwischen dem ersten verstärkten Wert und dem zweiten verstärkten Wert bei der ersten Verstärkungseinstellung denselben vorbestimmten Schwellenwert nicht überschreitet.

5. Stromkreisvorrichtung zum Detektieren einer Temperaturveränderungsrate außerhalb eines vorbestimmten Bereichs von Temperaturveränderungsraten, wobei die Vorrichtung umfasst:
eine Brücke (20) umfassend einen ersten und zweiten Widerstandszweig, welche parallel geschaltet sind, wobei jeder Zweig einen ersten Widerstand (2, 22), welcher in Reihe mit einem zweiten Widerstand (21, 3) geschaltet ist, umfasst, wobei die Brücke derart eingerichtet ist, dass sie mit einem elektrischen Netzgerät derart verbunden wird, dass eine Spannung über den ersten und den zweiten Widerstandszweig angelegt wird;
ein Messgerät (26), welches zwischen einer ersten Position (24) zwischen dem ersten (2) und dem zweiten (21) Widerstand des ersten Zweigs und einer zweiten Position (25) zwischen dem ersten (22) und dem zweiten (3) Widerstand des zweiten Zweigs verbunden ist, welches so eingerichtet ist, dass es ein Ausgangssignal bereitstellt, welches indikativ für den Spannungsunterschied zwischen den genannten Positionen (24, 25) ist; und
einen Prozessor (28) zum Messen des Ausgangssignals und zum Speichern eines ersten gemessenen Wertes des Ausgangssignals zu einer ersten Zeit und eines zweiten gemessenen Wertes des Ausgangssignals zu einer zweiten Zeit, zum Vergleichen der gemessenen Werte und zum Bereitstellen eines Alarmsignals, wenn der Unterschied zwischen diesem ersten gemessenen Wert und diesem zweiten gemessenen Wert einen vorbestimmten Schwellenwert überschreitet;
wobei der erste Widerstand (2) des ersten Zweigs und der zweite Widerstand (3) des zweiten Zweigs jeweils ein entsprechendes hitzeempfindliches Element (2, 3) mit einer vorbestimmten Änderung des elektrischen Widerstandes mit der Temperatur umfassen, wobei die hitzeempfindlichen Elemente (2, 3) sich so entlang der Länge eines langgestreckten Kabels (1) erstrecken, dass der Spannungsunterschied zwischen diesen Positionen (24, 25) indikativ für den Widertand der hitzeempfindlichen Elemente (2, 3) ist.

6. Vorrichtung nach Anspruch 5, wobei mindestens einer des zweiten Widerstandes (21) des ersten Zweigs und des ersten Widerstands (22) des zweiten Zweigs ein digitales Potentiometer umfasst, wobei die Vorrichtung einen Prozessor (28) umfasst, welcher zum Steuern des Widerstandes dieses Potentiometer oder dieser Potentiometer (21, 22) derart eingerichtet ist, dass der Spannungsunterschied zwischen diesen Positionen (24, 25) minimiert wird.

7. Vorrichtung nach Anspruch 5 oder Anspruch 6, wobei die Vorrichtung weiterhin einen programmierbaren Verstärker (27) umfasst, welcher mit dem Messgerät (26) verbunden ist und zum Verstärken des Ausgangssignals eingerichtet ist; und
einen Prozessor (28), welcher in einer ersten Konfiguration angeordnet ist, um die Verstärkung des Verstärkers (27) zu steuern.

8. Vorrichtung nach Anspruch 7, wobei der Prozessor (28) eingerichtet ist, gemessene Werte des Ausgangssignals in vorbestimmten Intervallen zu speichern und die Abfolge gemessener Werte zu speichern.

9. Vorrichtung nach Anspruch 8, wobei der Prozessor (28) eingerichtet ist, den letzten gespeicherten Wert und einen früher gespeicherten Wert zu vergleichen, und ein Alarmsignal auszugeben, wenn der Unterschied zwischen diesen gespeicherten Werten einen vorbestimmten Schwellenwert überschreitet.

10. Vorrichtung nach Anspruch 8 oder Anspruch 9, wobei der Prozessor (28) eingerichtet ist, diese Ausgangswerte bei einer ersten Verstärkungseinstellung des programmierbaren Verstärkers (27) und bei einer zweiten Verstärkungseinstellung des programmierbaren Verstärkers (27) zu messen.

11. Vorrichtung nach einem der Ansprüche 5-10, wobei die Vorrichtung weiterhin umfasst:
ein elektrisches Netzgerät (23) zum Bereistellen einer Spannung über diese Brücke (20); und
einen Prozessor (28), welcher eingerichtet ist, ein Fehlfunktionssignal auszugeben, wenn das Ausgangssignal indikativ für einen Ausfall eines dieser hitzeempfindlichen Elemente (2, 3) ist.

12. Vorrichtung nach einem der Ansprüche 5-11, wobei mindestens eines dieser hitzeempfindlichen Elemente (2, 3) zwei Leiter (4-7) umfasst, wobei jeder Leiter (4-7) sich entlang der Länge des Kabels (1) erstreckt und eine vorbestimmte Veränderung des elektrischen Widerstandes mit der Temperatur hat, wobei die Leiter (4-7) in elektrischer Reihenschaltung an einem Ende des Kabels (1) verbunden sind.

13. Vorrichtung nach einem der Ansprüche 5-11, wobei diese hitzeempfindlichen Elemente (2, 3) einen positiven Temperaturkoeffizienten des Widerstandes haben.

14. Vorrichtung nach Anspruch 5, wobei der Prozessor eine Computervorrichtung umfasst, welche umfasst:
einen Programmspeicher, welcher prozessorlesbare Befehle speichert; und
einen Prozessor (28), welcher konfiguriert ist, in diesem Programmspeicher gespeicherte Befehle zu lesen und auszuführen;
wobei die prozessorlesbaren Befehle Befehle zur Steuerung des Prozessors (28) umfassen, um:
den ersten Wert des Ausgangssignals zu einer ersten Zeit zu messen;
den zweiten Wert des Ausgangssignals zu einer zweiten, späteren Zeit zu messen;
die gemessenen Werte zu vergleichen; und
das Alarmsignal bereitzustellen, wenn der Unterschied zwischen diesem ersten gemessenen Wert und diesem zweiten gemessenen Wert einen vorbestimmten Schwellenwert überschreitet.

15. System umfassend einen Behälter (13), welcher eine Flüssigkeitsmenge mit einer zur Umgebungstemperatur verschiedenen Temperatur beinhaltet, und eine Vorrichtung nach einem der Ansprüche 5-14, wobei dieses mindestens eine hitzeempfindliche Element (2, 3) sich um mindestens einen Abschnitt dieses Behälters (13) erstreckt.

## Revendications

1. Procédé de détection d'un taux de variation de température à l'extérieur d'une plage prédéterminée de taux de variation de température, le procédé consistant à :
fournir un câble (1) allongé comprenant deux éléments thermosensibles (2, 3) s'étendant le long de la longueur du câble (1), chaque élément (2, 3) ayant une variation de résistance électrique prédéterminée avec la température ;
coupler le câble (1) allongé à une paire de résistances (21, 22) pour former un pont (20) comprenant des première et deuxième branches de résistances connectées en parallèle, chaque branche comprenant une première résistance (2, 22) connectée en série avec une deuxième résistance (21, 3), la première résistance (2) de la première branche et la deuxième résistance (3) de la deuxième branche comprenant chacune un élément respectif parmi les éléments thermosensibles (2, 3) ;
coupler un dispositif de mesure (26) entre une première position (24) entre les première (2) et deuxième (21) résistances de la première branche et une deuxième position (25) entre les première (22) et deuxième (3) résistances de la deuxième branche, le dispositif de mesure (26) étant agencé pour fournir un signal de sortie indicatif de la différence de tension entre lesdites positions (24, 25), la différence de tension entre lesdites positions (24, 25) étant indicative de la résistance des éléments thermosensibles (2, 3) ;
coupler le pont (20) à une alimentation électrique (23) de sorte qu'une tension soit appliquée entre les première et deuxième branches de résistances ;
mesurer une première valeur du signal de sortie à un premier instant;
mesurer une deuxième valeur du signal de sortie à un deuxième instant ultérieur ;
comparer les valeurs mesurées ; et
fournir un signal d'alarme si la différence entre ladite première valeur mesurée et ladite deuxième valeur mesurée dépasse un seuil prédéterminé.

2. Procédé selon la revendication 1, dans lequel le procédé de détection d'un taux de variation de température à l'extérieur d'une plage prédéterminée de taux de variation de température comprend la détection d'une réduction de la température dépassant un taux de réduction prédéterminé.

3. Procédé selon la revendication 1 ou la revendication 2, comprenant en outre les étapes consistant à :
amplifier les valeurs mesurées à un premier réglage de gain, les valeurs amplifiées au premier réglage de gain étant comparées et ledit signal d'alarme étant fourni si la différence entre la première valeur amplifiée et la deuxième valeur amplifiée dépasse le seuil prédéterminé ; et
amplifier les valeurs mesurées à un deuxième réglage de gain, les valeurs au deuxième réglage de gain étant comparées et ledit signal d'alarme étant fourni si la différence entre la première valeur amplifiée et la deuxième valeur amplifiée dépasse le même seuil prédéterminé.

4. Procédé selon la revendication 3, dans lequel un signal d'alarme différent est fourni si la différence entre la première valeur amplifiée et la deuxième valeur amplifiée au deuxième réglage de gain dépasse le seuil prédéterminé mais la différence entre la première valeur amplifiée et la deuxième valeur amplifiée au premier réglage de gain ne dépasse pas le même seuil prédéterminé.

5. Dispositif de circuit électrique pour détecter un taux de variation de température à l'extérieur d'une plage prédéterminée de taux de variation de température, le dispositif comprenant :
un pont (20) comprenant des première et deuxième branches de résistances connectées en parallèle, chaque branche comprenant une première résistance (2, 22) connectée en série avec une deuxième résistance (21, 3), le pont étant agencé de manière à être couplé à une alimentation électrique couplée au pont de sorte qu'une tension soit appliquée entre les première et deuxième branches de résistances ;
un dispositif de mesure (26) couplé entre une première position (24) entre les première (2) et deuxième (21) résistances de la première branche et une deuxième position (25) entre les première (22) et deuxième (3) résistances de la deuxième branche, agencé pour fournir un signal de sortie indicatif de la différence de tension entre lesdites positions (24, 25) ; et
un processeur (28) pour mesurer le signal de sortie et pour mémoriser une première valeur mesurée du signal de sortie à un premier instant et une deuxième valeur mesurée du signal de sortie à un deuxième instant, comparer les valeurs mesurées et fournir un signal d'alarme si la différence entre ladite première valeur mesurée et ladite deuxième valeur mesurée dépasse un seuil prédéterminé ;
dans lequel la première résistance (2) de la première branche et la deuxième résistance (3) de la deuxième branche comprennent chacune un élément thermosensible (2, 3) respectif ayant une variation de résistance électrique prédéterminée avec la température, les éléments thermosensibles (2, 3) s'étendant le long de la longueur d'un câble (1) allongé de sorte que la différence de tension entre lesdites positions (24, 25) est indicative de la résistance des éléments thermosensibles (2, 3).

6. Dispositif selon la revendication 5, dans lequel au moins l'une de la deuxième résistance (21) de la première branche et de la première résistance (22) de la deuxième branche comprend un potentiomètre numérique, le dispositif comprenant un processeur (28) agencé pour commander la résistance dudit potentiomètre ou desdits potentiomètres (21, 22) de manière à réduire à un minimum la différence de tension entre lesdites positions (24, 25).

7. Dispositif selon la revendication 5 ou la revendication 6, dans lequel le dispositif comprend en outre un amplificateur à gain programmable (27) couplé au dispositif de mesure (26) et agencé pour amplifier le signal de sortie ; et
un processeur (28) agencé en une première configuration pour commander le gain de l'amplificateur (27).

8. Dispositif selon la revendication 7, dans lequel le processeur (28) est agencé pour mémoriser les valeurs mesurées du signal de sortie à des intervalles prédéterminés, et pour mémoriser la série de valeurs mesurées.

9. Dispositif selon la revendication 8, dans lequel le processeur (28) est agencé pour comparer la dernière valeur mémorisée et une valeur mémorisée précédemment, et pour délivrer un signal d'alarme si la différence entre lesdites valeurs mémorisées dépasse un seuil prédéterminé.

10. Dispositif selon la revendication 8 ou la revendication 9, dans lequel le processeur (28) est agencé pour mesurer lesdites valeurs de sortie à un premier réglage de gain de l'amplificateur à gain programmable (27) et à un deuxième réglage de gain de l'amplificateur à gain programmable (27).

11. Dispositif selon l'une quelconque des revendications 5 à 10, le dispositif comprenant en outre :
une alimentation électrique (23) pour appliquer une tension aux bornes dudit pont (20) ; et
un processeur (28) agencé pour délivrer un faux signal si le signal de sortie est indicatif d'une coupure de l'un quelconque desdits éléments thermosensibles (2, 3).

12. Dispositif selon l'une quelconque des revendications 5 à 11, dans lequel au moins l'un desdits éléments thermosensibles (2, 3) comprend deux conducteurs (4 - 7), chaque conducteur (4 - 7) s'étendant le long du câble (1), et ayant une variation de résistance électrique prédéterminée avec la température, les conducteurs (4 - 7) étant couplés en série électrique à une extrémité du câble (1).

13. Dispositif selon l'une quelconque des revendications 5 à 11, dans lequel lesdits éléments thermosensibles (2, 3) ont un coefficient de température positif de résistance.

14. Dispositif selon la revendication 5, dans lequel le processeur comprend un dispositif informatique comprenant :
une mémoire de programme mémorisant des instructions pouvant être lues par un processeur ; et
un processeur (28) configuré pour lire et exécuter les instructions mémorisées dans ladite mémoire de programme ;
dans lequel les instructions pouvant être lues par un processeur comprennent des instructions commandant le processeur (28) pour :
mesurer la première valeur du signal de sortie à un premier instant;
mesurer la deuxième valeur du signal de sortie à un deuxième instant ultérieur ;
comparer les valeurs mesurées ; et
fournir un signal d'alarme si la différence entre ladite première valeur mesurée et ladite deuxième valeur mesurée dépasse un seuil prédéterminé.

15. Système comprenant un récipient (13) pour contenir un volume de fluide à une température non ambiante, et un dispositif selon l'une quelconque des revendications 5 à 14, dans lequel ledit au moins un élément thermosensible (2, 3) s'étend autour d'au moins une partie dudit récipient (13).
